# EUROPEAN PATENT APPLICATION

(11) **EP 4 799 800 A1**
(43) Date of publication of application: **02.09.2026**
(21) Application number: 25161162.0
(22) Date of filing: 28.02.2025
(51) Int. Cl.: B29D 11/00, B29C 64/112

(54) **METHOD OF MANUFACTURING AN OPHTHALMIC LENS**

(71) Applicant: Carl Zeiss Vision International GmbH, 73430 Aalen (DE)
(72) Inventor: GLOEGE, Thomas, 73430 Aalen (DE); STROISCH, Marc, 73430 Aalen (DE); CASTRO SMIRNOV, Jose Raul, 73430 Aalen (DE); REESE, Martin, 73430 Aalen (DE); PUETZ, Joerg, 73430 Aalen (DE)
(74) Representative: Pfiz/Gauss Patentanwälte PartmbB

(57) **Abstract**

The invention relates to a method of manufacturing a spectacle lens (80), in which a plurality of stacked volume layers VLi, i = 1, 2, 3, ... is generated, each of which is produced from a specific volume layer starting material Mi, i = 1, 2, 3, ... which contains at least one reactive component. According to the invention, the volumetric layer starting material Mi of each volumetric layer VLi, i = 1, 2, 3, ... is subjected to free radical polymerization by means of UV radiation prior to application of the overlying volumetric layer VLi+1, i = 1, 2, 3, ... by means of UV radiation for radical polymerization of the at least one reactive component in the presence of a inhibitor present on a surface of the volume layer starting material Mi in such a way that a volume layer VSi and a surface layer OFSi complementary to the volume layer VSi are formed in the volume layer VLi with the volume layer starting material Mi, wherein in the volume layer VSi , i = 1, 2, 3, ... the cure level of the at least one reactive component assumes at least the value PVSi, i = 1, 2, 3, ... and wherein the following applies to the cure level POFSi, i = 1, 2, 3, ... in the surface layer OFSi: POFSi < PVSi. By applying a volume layer VLi+1, i = 1, 2, 3, ... on the volume layer VLi, i = 1, 2, 3, ... after treating the volume layer starting material Mi therein, the volume layer starting material Mi+1 of the volume layer VLi+1, i = 1, 2, 3, ... is at least partially mixed with the volume layer starting material Mi of the volume layer VLi, i = 1, 2, 3, ... in the surface layer OFSi, i = 1, 2, 3, .... In a transition zone TZi,i+1, i = 1, 2, 3, ... extending from the surface layer OFSi, i = 1, 2, 3, ... of the volume layer VLi, i = 1, 2, 3, ... into the volume layer VLi+1, the volume layer starting material Mi+1 of the volume layer VLi+1 is at least partially mixed with the volume layer starting material Mi of the volume layer VLi in the surface layer OFSi. The mixing is done in such a way that starting from the volume layer VSi the concentration CMi of the volume layer starting material Mi decreases continuously through the surface layer OFSi, i = 1, 2, 3, ... up into the transition zone TZi,i+1 down to a minimum and starting from the volume layer VSi+1 the concentration CMi+1 of the volume layer starting material Mi+1 decreases continuously through the transition zone TZi,i+1, i = 1, 2, 3, ... up into the surface layer OFSi, i = 1, 2, 3, ... down to a minimum.

## Description

The invention relates to a method of manufacturing a spectacle lens, in which a plurality of stacked volume layers VLi, i = 1, 2, 3, ... are generated, each of which is produced from a specific volume layer starting material Mi, i = 1, 2, 3, ... which contains at least one reactive component.

A spectacle lens can be, for example, a plano lens according to section 3.6.3 of DIN EN ISO 13666:2019-12 or a corrective lens according to section 3.5 of DIN EN ISO 13666:2019-12 (section 3.5.1), a protective lens (section 3.5.4), an absorptive lens (section 3.5.5), a tinted lens (section 3.5.6), a clear lens (section 3.5.7), a uniformly tinted lens (section 3.5.8), a gradient tinted lens (section 3.5.9), a photochromic lens (section 3.5.11) or a polarizing lens (section 3.5.12).

WO 2019/110689 A1 discloses a method of additive manufacturing a spectacle lens using a printing process comprising: a step of providing a starting optical system having a first optical function and a first main refractive index, a step of providing a transition layer intended to be disposed between the starting optical system and a complementary optical element having a second main refractive index, the transition layer aiming at reducing unwanted reflection caused by the mismatch between the first and the second main refractive index, the transition layer having a transition optical function, and a step of additively manufacturing the complementary optical element on the transition layer, the complementary optical element having a second optical function, the second optical function being predetermined as a function of the first optical function and of the transition optical function.

The manufacture of a lens with two or more materials of different refractive index is common for GRIN optics applications. Examples are provided in US 7,255,914, US 6,582,807, US 11,092,720 and US 8,902,508. Therein, a multilayer nonlinear dielectric optical structure is formed by coextruding at least two polymeric materials using a multiplying element. When the layer spacing is much less than the wavelength of the probe light these materials behave as effective medium composites. In this case, the very small layer thickness (much below 400nm) leads to absence of Fresnel reflections.

In another example, US 6,027,672 discloses a process for depositing a polymeric element having a gradient index of refraction, in which two or more monomers are mixed in varying proportions and spray-deposited onto a substrate to form a layer. Each layer is then exposed to light to form a polymeric layer and subsequently another layer is deposited. The small jump in refractive index between subsequent layers would lead to low or neglectable reflectivity.

US 6,712,466 proposes a method for fabricating multicomponent lenses by introducing a layer of curable resin comprising monomers and polymerization initiators between two solid transparent lenses. By controlling the extent of light exposure across the surface of the curable resin, for example, a particular and unique refractive index profile can be produced. In this proposal, the resin would act as a GRIN transition zone in order to avoid the refractive index gap, thus reducing the reflection from the internal interface. Further, diffusion is not part of the fabrication process.

EP 3 696 578 A1 discloses producing a refractive optical component produced by additive manufacturing method. The main body consists of a plurality of optical layers extending between a front side and a back side. Each layer can have a different thickness, wherein each of the layers extends over a region common to all layers, the common region being greater than the maximum thickness of the respective layer. The main body has a refractive index modulated at least in the direction parallel to the principal axis, which is perpendicular to the layer structure. This reference addresses different ways to reduce stray light.

WO 2022/084461 A1 describes an optical system having at least a first and a second surface and discloses a device and a method for reducing ghost image visibility in an optical system comprising one or more lenses. Furthermore, this reference discloses a method for optimizing at least one anti-reflective coating of a transmission optical system to reduce ghost image visibility.

The object of the invention is to provide a spectacle lens with stacked volume layers with different optical properties, in which no or only minor reflection losses occur between the volume layers.

This task is solved by the method specified in claim 1. Advantageous further embodiments of the invention are given in the dependent claims.

The invention is based on the idea of producing a spectacle lens, e.g. a spectacle lens, in an additive process by printing into a mold, whereby layers having a certain thickness of material with a different refractive index are applied to one another. This measure increases the degree of freedom in optical design and makes it possible to produce ophthalmic lenses with little or no aberrations.

Additive manufacturing allows the possibility to create a spectacle lens consisting of a multilayer stack consisting of layers of different materials. Ophthalmic lenses including a stack of layers of different materials, enable an optical design with reduced aberrations that cannot be achieved with conventional lenses. However, in such a system Fresnel losses are induced by the refractive index difference at the interface of different materials. The reduction of transmission caused by high reflectivity makes multilayer lenses comprising layers of different materials less competitive compared to conventionally manufactured lenses even though they provide additional degrees of freedom concerning optical design. The reduction of reflectivity of a multilayer lens is described herein.

Fresnel losses are defined by the reflection of a portion of light when light is incident upon the interface between different refractive index materials.

Therefore, Fresnel reflections can lead to significant losses in a multilayer stack with a high number of interfaces. Such losses depend upon the index difference, the number of interfaces and the angle of incidence. E.g. the losses are on the order of 4 percent for an air-polymer/glass interface, and a total of 8% for entrance and exit ends of an optical element for a 1.5 refractive index lens.

When the angle of incidence θi = 0, the Fresnel equations for the Reflection R and the Transmission T reduce to $R = {\left(\frac{{n}_{t} - {n}_{i}}{{n}_{t} + {n}_{i}}\right)}^{2}$ $T = \frac{4 {n}_{t} {n}_{t}}{{\left({n}_{t}+{n}_{i}\right)}^{2}}$ where nᵢ, R, T and nₜ stand for refractive index of the material at the incidence medium, reflectance, transmittance and refractive index of the material at the transmitted medium respectively.

The presented equations assume that interfaces between different materials are impeccably flat and extremely sharp. The interface imperfections that can be roughness, diffuseness, or a combination of the two effects are the basis to generate a solution to the described problem which lead to a general decrease in the specular reflectance.

In order to minimize unwanted reflections at the boundaries of the layers, the invention proposes to generate a continuous change in the refractive index over a depth of preferably 1 µm.

One idea of the invention is to apply the material used for applying the layers in an additive process in a gas atmosphere containing some oxygen, which causes a layer not to harden completely in the area of its surface, so that when the next layer is applied at the layer boundary, a gradient material is created by mixing due to diffusion processes.

In particular, one idea of the invention is to produce a spectacle lens with a multilayer stack design in which the mixing of the two materials in contact in a multilayer structure causes the corresponding interface to appear diffuse as long as full mixing of the layers is prevented. It is to be remarked however that the spatial extension of the interface at which mixing occurs shall be small as compared to a total layer thickness.

A method according to the invention for manufacturing a spectacle lens comprises the following steps:
A plurality of stacked volume layers VLi, i = 1, 2, 3, ... are produced, each of which is made from a layer-specific volume layer starting material Mi, i = 1, 2, 3, ... which contains at least one reactive component. The volume layer starting material Mi of each volume layer VLi, i = 1, 2, 3, ... is treated by means of UV radiation for radical polymerization of the at least one reactive component in the presence of an inhibitor present on the surface before application of the volume layer VLi+1, i = 1, 2, 3, ... above it, in such a way that a volume layer VSi and a surface layer OFSi complementary to the volume layer VSi are formed in the treated volume layer VLi. In the volume layer VSi, i = 1, 2, 3, ... the cure level of the at least one reactive component assumes at least the value PVSi, i = 1, 2, 3, ... and the following applies to the cure level POFSi, i = 1, 2, 3, ... in the surface layer OFSi: POFSi < PVSi. By applying a volume layer VLi+1, i = 1, 2, 3, ... on the volume layer VLi, i = 1, 2, 3, ... after treating the volume layer starting material Mi therein, the volume layer starting material Mi+1 of the volume layer VLi+1, i = 1, 2, 3, ... is at least partially mixed with the volume layer starting material Mi of the volume layer VLi, i = 1, 2, 3, ... in the surface layer OFSi, i = 1, 2, 3, .... In a transition zone TZi,i+1, i = 1, 2, 3, ... extending from the surface layer OFSi, i = 1, 2, 3, ... of the volume layer VLi, i = 1, 2, 3, ... into the volume layer VLi+1, the volume layer starting material Mi+1 of the volume layer VLi+1 is at least partially mixed with the volume layer starting material Mi of the volume layer VLi in the surface layer OFSi. The mixing is done in such a way that starting from the volume layer VSi the concentration CMi of the volume layer starting material Mi decreases continuously through the surface layer OFSi, i = 1, 2, 3, ... up into the transition zone TZi,i+1 down to a minimum and starting from the volume layer VSi+1 the concentration CMi+1 of the volume layer starting material Mi+1 decreases continuously through the transition zone TZi,i+1, i = 1, 2, 3, ... up into the surface layer OFSi, i = 1, 2, 3, ... down to a minimum. The invention provides that for the wavelength dependent refractive index n(λ) of a material of the ophthalmic lens in a volume layer VLi and for the refractive index nVLi+1(λ) of a material of the ophthalmic lens in an adjacent volume layer VLi+1, in each case outside a surface layer OFSi, i = 1, 2, 3, ... and a transition zone TZi,i+1, i = 1, 2, 3, ... after treatment with UV radiation, the following applies: nVLi(λ) > nVLi+1(λ) or nVLi(λ) < nVLi+1(λ), wherein for the refractive index nVLi(λ) of a material of the ophthalmic lens in a volume layer VLi and for the refractive index nVLi+1(λ) of a material of the ophthalmic lens in a volume layer VLi+1 adjacent thereto, in each case outside a surface layer OFSi, i = 1, 2, 3, ... and outside a transition zone ÜZTZi,i+1, i = 1, 2, 3, ... after treatment with UV radiation holds: nVLi(λ) > nVLi+1(λ) or nVLi(λ) < nVLi+1(λ), where λ is the optical wavelength in a wavelength interval λ1 ≤ λ ≤ λ2 and λ1 ≠ λ2.

For example, a favorable wavelength interval is 300nm ≤ λ ≤ 2000nm. Preferably the wavelength interval is 350nm ≤ λ ≤ 1500nm, particularly favorable the wavelength interval is 400nm ≤ λ ≤ 800nm.

It is to be noted that the layer-specific volume layer starting material Mi, i = 1, 2, 3, ... may vary from volume layer to volume layer. It is also to be noted that the layer-specific volume layer starting material Mi, i = 1, 2, 3, ... of volume layers VLi, VLi+2, between which a volume layer VLi+1 is arranged can be but needs not be the same.

A surface layer OFSi, i = 1, 2, 3, ... of a volume layer VLi and a transition zone TZi,i+1, i = 1, 2, 3, ... of a volume layer VLi+1, i = 1, 2, 3, ... arranged thereon form a spatially extended area in the ophthalmic lens in which the refractive index changes from the volume layer VSi, i = 1, 2, 3, ...form a spatially extended area in the ophthalmic lens in which the refractive index changes from the volume layer VSi, i = 1, 2, 3, ... to the volume layer VSi+1, i = 1, 2, 3,

A bulk layer starting material with a reactive component is understood to be a material that contains a component for which a chemical reaction can be triggered by adjusting process conditions. The reactive component can for instance be a monomer containing e.g. a (meth)acrylate group and/or an epoxy group and/or a vinyl group. In case of a radically initiated reaction, oxygen is particularly suitable as an inhibitor.

Advantageously, the volume layer starting material Mi of each volume layer VLi is a material with one or more functional groups, in particular a (meth)acrylate group and/or an epoxide group and/or a vinyl group.

An advantageous further development of the invention provides that the minimum concentration CMi of the bulk layer starting material Mi in the transition zone TZi,i+1 and the minimum concentration CMi+1 of the bulk layer starting material Mi+1 in the surface layer OFSi each have the value zero.

The volume layer starting material Mi of the volume layer VLi and the volume layer starting material Mi+2 of the volume layer VLi+2 can be identical.

It is advantageous if a refractive index of a material of the ophthalmic lens, starting from the volume layer VSi through a surface layer OFSi and an adjacent transition zone TZi,i+1, continuously changes from the refractive index nVLi(λ) of the volume layer VSi outside the surface layer OFSi and a transition zone TZi-1,i, i = 2, 3, ... to the refractive index nVLi+1(λ) of the volume layer VSi+1 of the volume layer VLi+1 outside the transition zone TZi,i+1, i = 1, 2, 3, ... and a surface layer OFSi, i = 1, 2, 3, ... connected to the volume layer VSi+1.

It is favorable if for the absolute value of the difference D of the refractive index nVLi(λ) of a material of the ophthalmic lens in the volume layer VSi of the volume layer VLi and the refractive index nVLi+1(λ) of a material of the ophthalmic lens in the volume layer VSi+1 of the volume layer VLi+1 outside a surface layer OFSi, i = 1, 2, 3, ... and a transition zone TZi,i+1, i = 1, 2, 3, ... after treatment with UV radiation: | D | ≠ 0, preferably | D | ≥ 0,05, particularly favored | D | ≥ 0.1.

The layer volume starting material Mi of each volume layer VLi is preferably a material with one or more functional groups, in particular an (meth)acrylate group and/or an epoxy group and/or a vinyl group.

Each volume layer VLi, i = 1, 2, 3, ... can be applied from a layer volume starting material Mi in an additive process.

In particular, the additive process can be a printing process in which a volume layer VLi, i = 1, 2, 3, ... is produced from a layer volume starting material Mi by applying individual droplets of body material.

For example, the thickness do of the surface layer OFSi in a treated volume layer VLi can be: 600nm ≤ do ≤ 2000nm. The thickness dt of the transition zone TZi,i+1 in a treated volume layer VLi+1 can be: 600nm ≤ dt ≤ 2000nm.

In particular, a method according to the invention may comprise the following steps:
a. Providing a substrate,
b. Provision of a three-dimensional model of the ophthalmic lens, the three-dimensional model having a plurality of layered volumes of a body material with a first refractive index ni and with a further refractive index ni+1 different from the first refractive index ni, which layered volumes are successively interspersed with one another from a body axis A,
c. Digital slicing of the three-dimensional model from step b. into the individual layers (40.1, 40.2, 40.3, ...), the individual layers each being divided into a grid with surface elements,
d. Providing a first printing ink, preferably 3D printing ink, in the form of the body material with the first refractive index ni and a further printing ink, preferably 3D printing ink, in the form of the body material with the further refractive index ni+1,
e. Construction of the ophthalmic lens from the sum of the individual layers from step c. by means of a printing process on the substrate, in which the first printing ink and the further printing ink are each applied in the form of drops to defined surface elements of the surface of a single layer, which has a print head nozzle arrangement with a plurality of print head nozzles in order to produce in this way the plurality of stacked volume layers VLi, i = 1, 2, 3, ... from a volume layer starting material Mi which contains at least one reactive component.

For the production of a spectacle lens, in particular at least ten stacked volume layers VLi, i = 1, 2, 3, ... can be produced, which are produced alternately from first and a further volume layer starting material Mi, i = 1, 2, 3, ..., which contains at least one reactive component. It should be noted that a spectacle lens according to the invention can also have less than 10 or more than 10 stacked volume layers VLi, i = 1, 2, 3, ....

The invention also extends to a spectacle lens manufactured according to a method as described above.

The invention is explained in more detail below with reference to the schematic embodiments shown in the drawings.

It shows:
- Fig. 1: a device for producing a spectacle lens, which contains a print head;
- Fig. 2: a top view of the print head;
- Fig. 3: a three-dimensional model of a spectacle lens;
- Fig. 4: a grid for a layer of the model of a spectacle lens with surface elements;
- Fig. 5: a distribution of a predetermined thickness of a substrate applied to a layer in an additive process as a grayscale image;
- Fig. 6: a spectacle lens built up in layers using an additive process;
- Fig. 7: a multilayer stack design of a spectacle lens with a transition layer formed between two volume layers;
- Fig. 8a: to Fig. 8g the formation of a transition layer between two volume layers;
- Fig. 9: a spatial progression of the refractive index in a spectacle lens;
- Fig. 10: a graph with measurement curves for the reflectivity of a spectacle lens; and
- Fig. 11: another graph with measurement curves for the reflectivity of a spectacle lens.

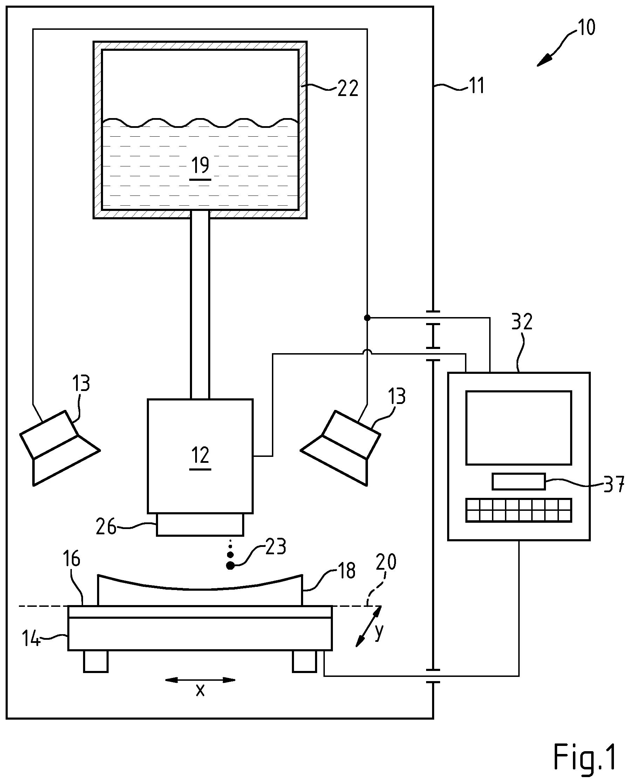

Fig. 1 shows a device 10 for manufacturing an optical element, in particular a spectacle lens, e.g. a spectacle lens. The device 10 has a gas-tight working chamber 11 and contains a print head 12 and an illumination unit 13 for providing UV-radiation. In the device 10 there is an xy-displacement unit 14 with a table 16, which serves to hold a substrate 18. On the table 14, the substrate 18 can be displaced relative to the print head 12 in a plane 20 in two mutually perpendicular directions x, y.

The device 10 makes it possible to apply a 3D printing ink 19 from a reservoir 22 to the substrate 18 in layers in the form of printing ink droplets 23 by means of the print head 12 in order to produce a spectacle lens 24. A defined gas atmosphere can be set for the applied printing ink in the working chamber and a predetermined process temperature Tp, to which the printing ink is exposed, can be set by a means of providing IR radiation (not shown).

It should be noted that in an alternative device to the device described above, it may be provided that the print head 12 is received on a displacement unit to move it relative to the substrate 118 disposed on a table 16. In addition, it should be noted that it may also be provided that both the print head 12 and the table 16 used for holding a substrate 18 may each be adjusted by means of an xy displacement unit to move the print head 12 relative to the substrate 18.

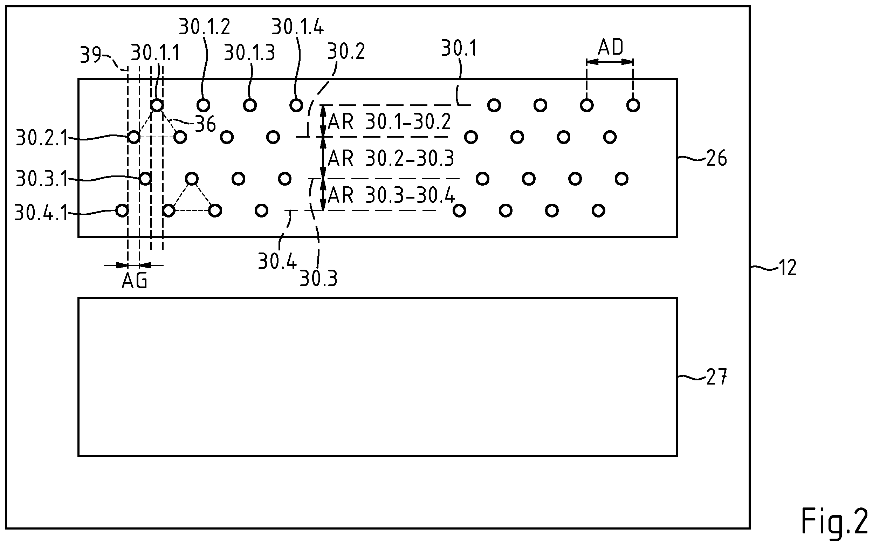

Fig. 2 is a top view of the print head 12 with a print head nozzle arrangement 26 and with a device 27 for providing UV radiation, which contains light-emitting diodes for curing 3D printing ink applied to the substrate 18 with UV radiation in the gas atmosphere prevailing in the working chamber 11. The print head nozzle arrangement 26 has print head nozzles 30.1.1, 30.1.2, 30.1.3 and 30.1.4 arranged in four parallel, straight rows 30.1, 30.2, 30.3, 30.4. each containing a piezo actuator. It should be noted that the print head 12 can in principle also be designed as a thermal inkjet print head.

Each of the rows 30.1, 30.2, 30.3 and 30.4 contains 256 printhead nozzles. The distance AD between two adjacent printhead nozzles 30.1. i and 30.1.i+1, 30.2.i and 30.2.i+1, 30.3.i and 30.3.i+1, 30.4.i and 30.4.i+1, i= 1, 2, ..., 256in a row is 282 µm. The distance AR30.1-30.2 of row 30.1 from row 30.2 is approx. 300 µm. The same applies to the distance AR30.3-30.4 of row 30.3 from row 30.4.

The printhead nozzles 30.1.1, 30.1.2, ... of series 30.1 are arranged offset to the printhead nozzles 30.2.1, 30.2.2, 30.2.3, ... of series 30.2 in such a way that one printhead nozzle 30.1.1, 30.1.2, 30.1.3, ... of row 30.1 with two adjacent printhead nozzles 30.2.1, 30.2.2, 30.2.3 of row 30.2 to form an isosceles triangle 36.

The printhead nozzles 30.3.1, 30.3.2, 30.3.3 of row 30.3 are also arranged offset to the printhead nozzles 30.4.1, 30.4.2, ... of row 30.4 in such a way that in each case one printhead nozzle 30.3.1 of row 30.3 forms an isosceles triangle 36 with two adjacent printhead nozzles 30.4.1, 30.4.2 of row 30.4.

The successive nozzles 30.1.1, 30.2.1, 30.3.1 and 30.4.1 in rows 30.1, 30.2, 30.3 and 30.4 are arranged offset to each other. They each lie on parallel straight lines 39 perpendicular to the direction of the course of the rows, whereby the following applies to the distance AG between two adjacent straight lines: AG = 3 x 23.5 µm. = 70.5 µm.

The device 10 shown in Fig. 1 has a computer unit 32 with a printhead controller 37, which is used to control the piezo actuators of the printhead nozzles 30.1.1, 30.1.2, 30.1.3 and 30.1.4 as well as 30.2.1, 30.2.2, 30.2.3, ... 30.3.1, ... 30.4.1, ... of the printhead nozzle arrangement 26. By activating the piezo actuator of a printhead nozzle 30.1.1, ..., a drop of 3D printing ink can be generated and projected onto a defined position in a surface on the substrate 18, which is determined by the position of the printhead nozzle 30.1.1, ... in the printhead 12 and the setting of the xy displacement unit 14 as well as the arrangement of the substrate 18 on the table 16 of the displacement unit 14.

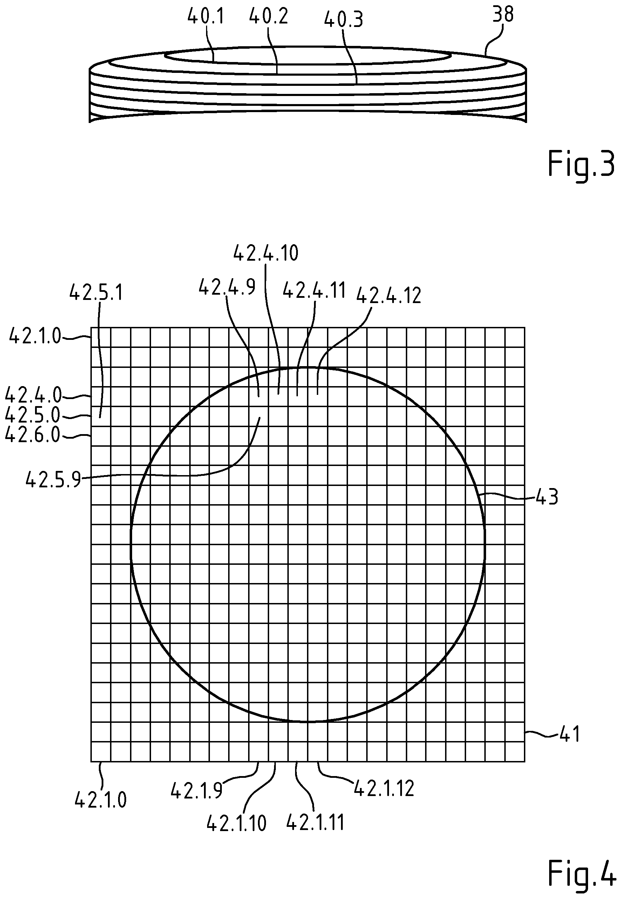

Fig. 3 shows a three-dimensional model 38 of a lens in the form of a spectacle lens, which is divided into individual layers 40.1, 40.2, 40.3, 40.4 .... Each of the layers 40.1, 40.2, 40.3, 40.4 ... is in turn divided into a grid with square surface elements.

Fig. 4 shows the grid 41 of layer 40.3 with the surface elements 42.1.1, 42.1.2, 42.1.3, ... 42.2.1, 42.2.2, 42.2.3, ... 42.3.1, 42.3.2, 42.3.3, ..., into which a surface 43 of layer 40.3 is divided. The grid has N columns and M rows in which the surface elements are arranged, whereby for N, M, for example, the following can apply: N = 10000 and M = 15000. The surface elements 42.1.1, 42.1.2, 42.1.3, 42.1.4, ... are arranged next to each other in a row 42.1.0 of the grid 41. The same applies to the surface elements 42.2.1, 42.2.2, 42.2.3, 42.2.4 or 42.3.1, 42.3.2, 42.3.3, 42.3.4, which are also arranged next to each other in a row 42.2.0 or 42.3.0 of the grid 41. The surface elements 42.1.1, 42.2.1, 42.3.1, 42.4.1 ... on the one hand and the surface elements 42.1.2, 42.2.2, 42.3.2, 42.4.2, ... as well as 42.1.3, 42.2.3, 42.3.3, 42.4.3, ... and 42.1.4, 42.2.4, 42.3.4, 42.4.4, ... on the other hand are arranged next to each other in different columns 42.0.1, 42.0.2, 42.0.3 and 42.0.4.

By displacing the printhead nozzle arrangement 26 of the printhead 12 relative to a substrate 18 parallel to the columns 42.0.1, 42.0.2, 42.0.3, ... of the grid 41 at a uniform speed and by controlling the printhead nozzles 30.1.1, 30.1.2, ... for each of the surface elements 42.1.1, 42.2.1, ..., it can be achieved that exactly one drop 23 of printing ink 19 or no drop 23 of printing ink is arranged in a surface element 42.1.1, 42.2.1, ....

Each fourth surface element 42.1.1, 42.1.4, ... in a row of the grid 41 receives printing ink from two print head nozzles 30.1.1, 30.1.2, ... 30.2.1, 30.2.2, ..., 30.3.1, 30.3.2 arranged adjacent to each other in a nozzle row 30.1, 30.2, 30.3, 30.4. Surface elements of the grid 41, which are arranged in the four different adjacent rows 42.1.0, 42.1.1, 42.1.2, ..., receive printing ink from printhead nozzles 12, which are located in different nozzle rows 30.1, 30.2, 30.3, 30.4 of the printhead 12, when the printhead 12 is in operation.

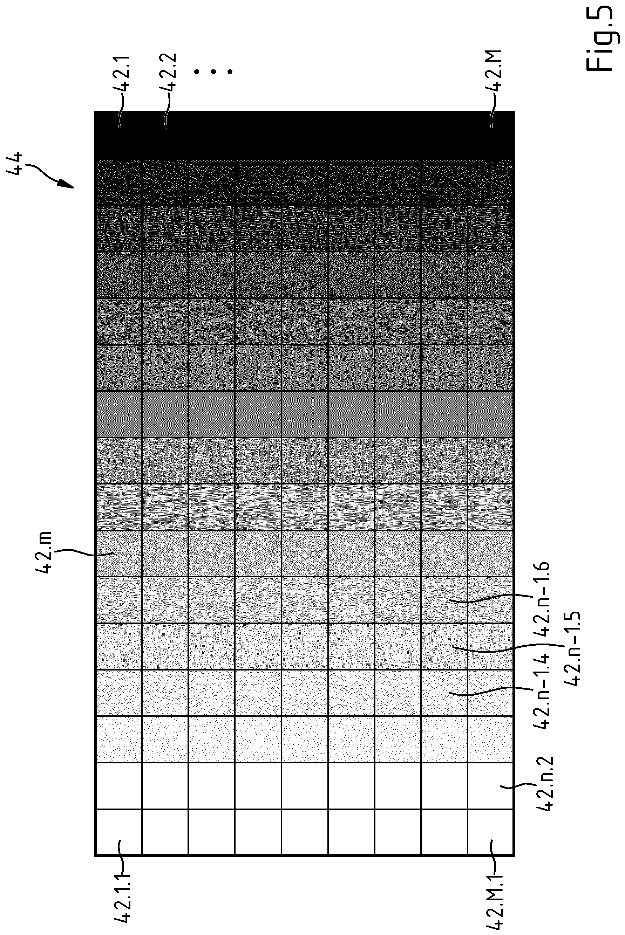

Fig. 5 shows a grayscale image 44 of a distribution of a predetermined thickness of a layer 40 on the substrate 18. The local grayscale in the grayscale image is a measure of the local thickness of the layer.

The local thickness of the layer is specified by digitally cutting up a three-dimensional model 38 of a spectacle lens and dividing it into a grid with surface elements 42.n.m with n = 1, 2, 3 ... and m = 1, 2, 3, ..., which has rows 42.n with n = 1, 2, 3, ... and columns 42.m with m = 1, 2, 3, ....

In order to produce the layer 40 with the predetermined, generally locally varying thickness, the printhead nozzles 30.1.1, ... of the printhead nozzle arrangement 26 are actuated in a clocked manner, taking into account an assumed print ink droplet volume v, whereby the substrate 18 is displaced relative to the printhead 12.

The assumed print ink droplet volume v can be, for example, an averaged print ink droplet volume m, which is determined for the printhead nozzles 30.n.m, n = 1, 2, 3, ...; m = 1, 2, 3, ... of the printhead nozzle arrangement 26 for an operating state variable characterizing an operating state of the printhead nozzle arrangement 26. Such a possibly multi-dimensional operating state variable can be, for example, a printing frequency at which the printhead nozzle arrangement 26 is operated in the printhead 12 and/or a relative number n/N of printhead nozzles 30.n.m, which simultaneously provide a drop of printing ink when the printhead 12 is operated, and/or a temperature T of the printhead and/or a control voltage for printhead nozzles 30.n.m, n = 1, 2, 3, ...; m = 1, 2, 3, ... of the printhead nozzle arrangement 26 and/or a printing ink viscosity.

The determination of an averaged printing ink droplet volume m can be carried out, for example, in a gravimetric measurement, in which printing ink droplets are applied to a substrate 16 by means of the print head 12 on the basis of a control specification in an exactly defined number of printing ink droplets 23 and the substrate is then weighed.

As an alternative to a gravimetric determination, the average print ink droplet volume for the printhead nozzles 30.n.m, n = 1, 2, 3, ...; m = 1, 2, 3, of the printhead nozzle arrangement 26 can also be determined by measuring a local thickness of a layer which is produced by means of the printhead nozzle arrangement 26 with a plurality of printhead nozzles 30.n.m, n = 1, 2, 3, ...; m = 1, 2, 3, ... at a specific operating state variable of the printhead nozzle arrangement.

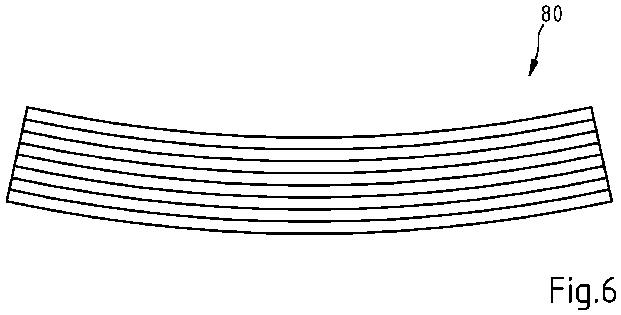

Fig. 6 shows a spectacle lens 80 built up layer by layer in an additive process by applying drops of printing ink from the print head. The ophthalmic lens 80 has a multilayer stack design with a transition layer formed between each of two volume layers.

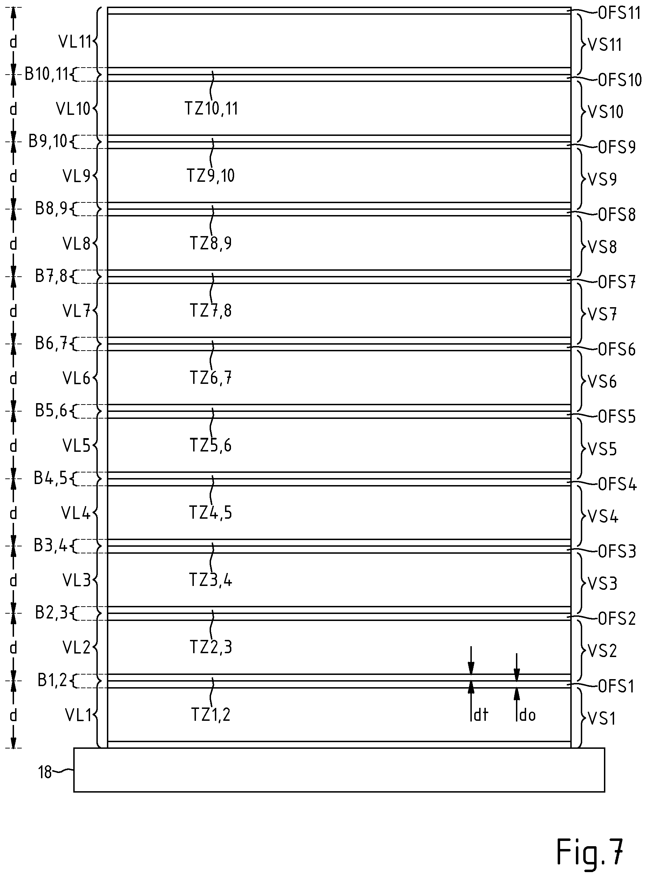

Fig. 7 shows the multilayer stack design of the ophthalmic lens 80. According to this multilayer stack design, the ophthalmic lens 80 has 11 superimposed volume layers VLi, i = 1, 2, 3, ..., which are each made from a specific volume layer starting material Mi, i = 1, 2, 3, ... 11, which contains at least one reactive component. The thickness d of each volume layer VLi, i = 1, 2, 3, ..., is constant in the present case and is 40 µm, for example. However, the thickness d of a volume layer VLi, i = 1, 2, 3, ... 11, can also be only 5 µm, for example, and is preferably in a range of 4 µm ≤ d ≤ 300 µm, preferably 5 µm ≤ d ≤ 200 µm. For one volume layer, several million drops of printing ink are applied, for example. The drops of printing ink are applied in such a way that a continuous volume layer of printing ink is formed, which is smoothed out by the surface tension. It should be noted that basically the multilayer stack design of the ophthalmic lens 80 can also have less than 11 or more than 11 stacked volume layers VLi, i = 1, 2, 3, ....

In each volume layer VLi, i = 1, 2, 3, ... 11, a volume layer VSi, i = 1, 2, 3, ... 11 and a surface layer OFSi adjacent to the volume layer VSi are formed. A transition zone TZi,i+1, i = 1, 2, 3, ... 10 extends from the volume layer VSi of each volume layer to the volume layer VSi-1, VSi+1 of an adjacent volume layer VLi-1, VLi+1, in which the volume layer starting material Mi+1, i = 1, 2, 3, ... 10 of the volume layer VLi+1, i = 1, 2, 3, ... 10 with the volume layer starting material Mi of the volume layer VLi, i = 1, 2, 3, ... 10 in the surface layer OFSi, i = 1, 2, 3, ... 10 or the volume layer starting material Mi-1, i = 2, 3, ... 11 of the volume layer VLi+1, i = 2, 3, ... 11 is mixed with the volume layer starting material Mi of the volume layer VLi, i = 1, 2, 3, ... 10 in the surface layer OFSi, i = 1, 2, 3, ... 10

The following applies to the thickness do of the surface layer OFSi in a treated volume layer VLi: 600nm ≤ do ≤ 2000nm. The following applies to the thickness dt of the transition zone TZi,i+1 in a treated volume layer VLi+1: 600nm ≤ dt ≤ 2000nm.

In the volume layers VSi, i = 1, 3, 5, 7, 9 and 11, the refractive index fulfills nVLi(λ) = nLi(λ) outside the transition zone TZi,i+1, whereby the refractive index nLi(λ) for a given wavelength λ in the volume layer is constant. In the volume layers VSi, i = 2, 4, 6, 8, 10, the refractive index nVLi(λ) = nHi(λ) of the volume material outside the transition zone TZi,i+1 is also the same, where the following applies: nLI(λ) < nHI(λ). A surface layer OFSi, i = 1, 2, 3, ... of a volume layer VLi and a transition zone TZi,i+1, i = 1, 2, 3, ... of a volume layer VLi+1, i = 1, 2, 3, ... arranged thereon form a spatially extended region Bi, i+1, i = 1, 2, 3, ... in the ophthalmic lens in which the refractive index of the material, starting from the volume layer VSi, i = 1, 2, 3, ... and extending into the volume layer VSi+1, i = 1, 2, 3, ..., changes from the value nLI(λ) to the value nHI(λ) or from the value nHI(λ) to the value nLI(λ).

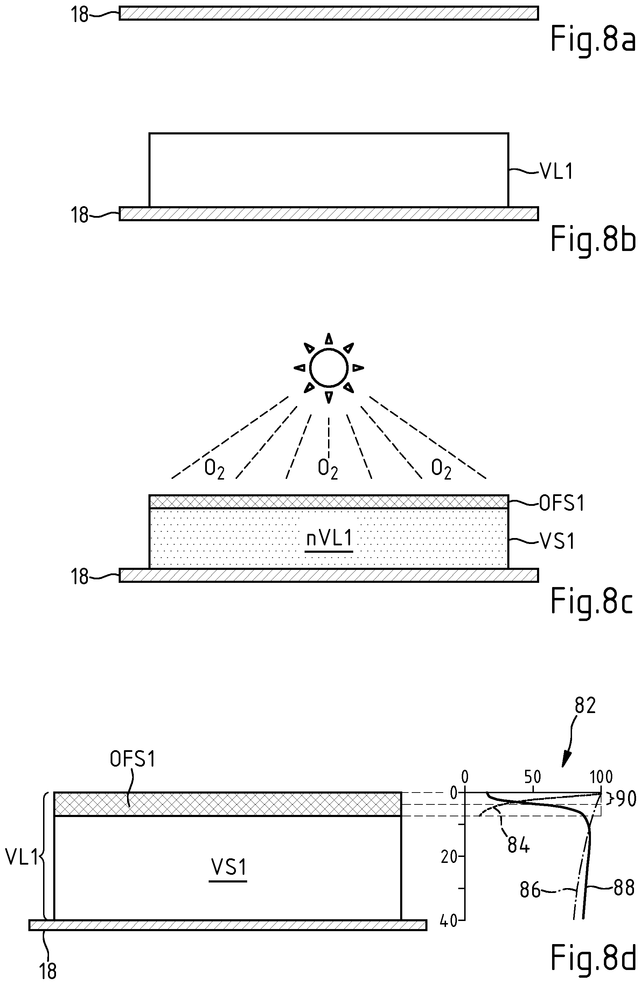

A surface layer OFSi, i = 1, 2, 3, ... of a volume layer VLi and a transition zone TZi,i+1, i = 1, 2, 3, ... 10 in the multilayer stack design of the ophthalmic lens is produced as described below with reference to Fig. 8a to Fig. 8f:
Fig. 8a shows the substrate 18 to which the volume layer VL1 is applied in an additive process by printing a printing ink from the material class e.g. (meth)acrylate and/or epoxy and/or vinyl mixed with a photoinitiator, whereby the printing ink has the refractive index nLi(λ). Fig. 8b shows an uncured volumetric layer VL1 with the substrate 18. Fig. 8c shows the curing of the volume layer VL1 in an oxygen containing atmosphere in the working chamber 11 of the device 10 for producing an optical element. It is to be noted that the oxygen containing atmosphere in the working chamber 11 of the apparatus 10 for producing an optical element is containing less than 100% oxygen. The volume layer VL1 is cured here in an atmosphere by exposure to UV radiation from the light-emitting diodes in the device 27 for providing UV radiation. The presence of the oxygen on the surface of the volume layer VL1 exposed to the UV radiation causes it to act as an inhibitor to delay a radical polymerization of the printing ink in the volume layer VL1 in a surface layer OFS1. As a result, the volume layer VL1 is only partially cured in the surface layer OFS1, but is essentially completely cured below the surface layer OFS1.

Fig. 8d shows the volume layer VL1 after curing by means of UV radiation and a graph 82 of the location-dependent dependence of the relative oxygen concentration KO2 in the volume layer VL1 of the relative degree of hardness CL in the volume layer caused by the UV radiation and the relative intensity IUV of the UV radiation triggering radical polymerization.

The following applies to the cure level POFSi, i = 1, 2, 3, ... in the surface layer OFSi: POFSi < PVSi, where PVSi is the cure level in the volume layer VSi.

Oxygen from the oxygen-containing atmosphere in the working chamber 11 of the device 10 for producing an optical element penetrates into the surface layer OFS1 due to diffusion. The concentration curve 84 shows the course of the oxygen concentration KO2 in the surface layer OFS1, whose thickness, i.e. depth expansion, is determined by the decay of the oxygen concentration therein

Below the surface layer OFS1, there is virtually no detectable oxygen from the oxygen-containing atmosphere in the working chamber 11 that is introduced by diffusion in the volume layer VL1. The concentration of oxygen is so low here that it is overcompensated by the concentration of the photoinitiator.

The exposure of the volume layer VL1 to UV radiation, in which the UV radiation penetrates into the volume layer VL1 with a location-dependent intensity I(s) corresponding to the intensity curve 86, therefore results in the degree of hardness therein having the curve shape corresponding to the hardness curve 88.

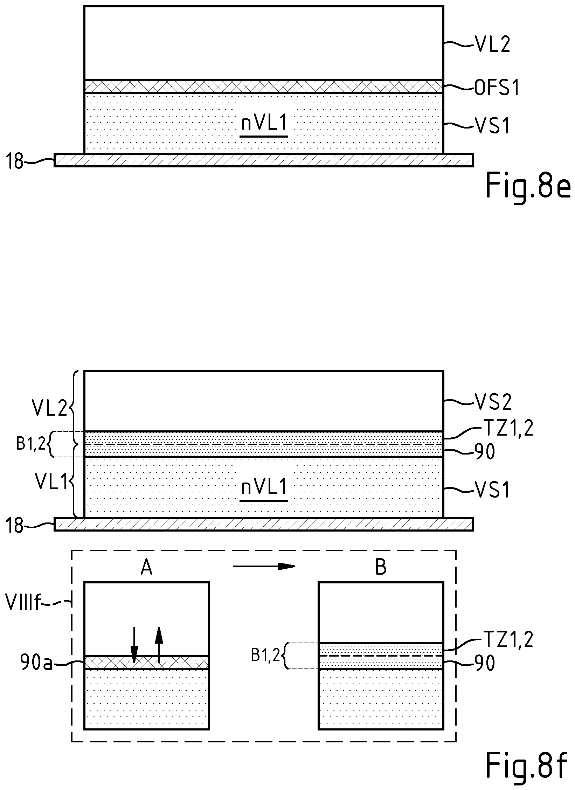

Fig. 8e shows the volume layer VL1 with the only incompletely cured surface layer OFS1, whereby the material of the volume layer VL1 underneath the surface layer OFS1 is almost completely cured. A volume layer VL2, which has the refractive index nHI(λ), is applied to the volume layer VL1 in an additive process by printing a further printing ink from the material class e.g. (meth)acrylate and/or epoxy and/or vinyl mixed with a photoinitiator.

The only incompletely hardened surface layer OFS1 has a section 90 shown in Fig. 8f, into which the material of the volume layer VL2 can diffuse in such a way that, as indicated in Fig. 8f in the section VIIIf, the material of the volume layer VL1 is mixed with the material of the volume layer VL2 due to diffusion, so that starting from the state A in the state B the transition zone TZi,i+1 is formed between the volume layer VL1 and the volume layer VL2, wherein the section 90 of the volume layer VL1 and the transition zone TZ1,2 form an area B1,2, in which material from the volume layer VL1 is mixed with material from the volume layer VL2 in such a way that the refractive index nVL1 of the material used when applying the volume layer VL1 changes from the volume layer VS1 to the refractive index nVL2 of the material used when applying the volume layer VL2 towards the volume layer VS2.

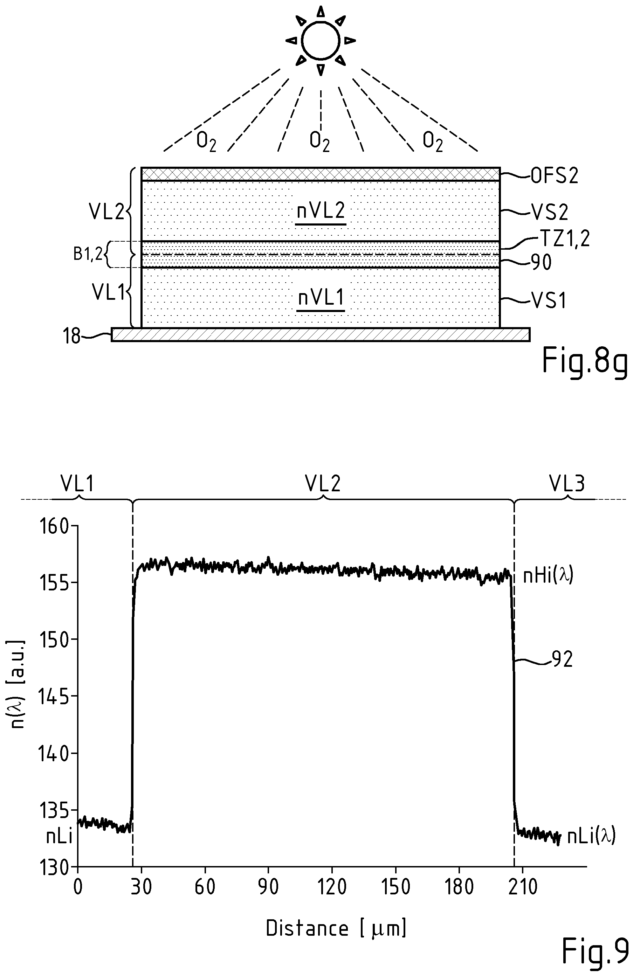

If the bulk layer VL2 is now cured in an oxygen containing atmosphere in the working chamber 11 of the device 10 for producing an optical element by exposure to UV radiation from the light-emitting diodes in the device 27 for providing UV radiation, as shown in Fig. 8g, an incompletely cured surface layer OFS2 is again formed in the bulk layer VL2, as described above for the surface layer OFS1 of the bulk layer VL1.

The successive application and curing of volume layers with a different refractive index in an oxygen containing atmosphere in a layer thickness-dependent process window on a substrate thus makes it possible to manufacture the ophthalmic lens 80 with the multilayer stack design shown in Fig. 7, whereby the thickness d of the areas Bi, i+1, in which there is a continuous change in the refractive index, can be about 4 µm.

Referring to Fig. 7, for the refractive index nVLi(λ) of a material of the ophthalmic lens 80 in a volume layer VLi and for the refractive index nVLi+1(λ) of a material of the ophthalmic lens 80 in a volume layer VLi+1 adjacent thereto, in each case outside a surface layer OFSi, i = 1, 2, 3, ... and outside a transition zone TZi,i+1, i = 1, 2, 3, ... after treatment with UV radiation it holds: nVLi(λ) > nVLi+1(λ) or nVLi (λ) < nVLi+1(λ), where λ is the optical wavelength in a wavelength interval 400nm ≤ λ ≤ 800nm. It is to be noted that it is an advantage that the above relation for nVLi(λ) and nVLi+1(λ) holds in a wavelength interval 350nm ≤ λ ≤ 1500nm or even better 300nm ≤ λ ≤ 2000nm.

The refractive index measurement curve 92 in Fig. 9 shows a spatially continuous progression of the refractive index n(λ) in the ophthalmic lens in the volume layers VL1, VL2 and VL3 from Fig. 7.

The progression of the refractive index n(λ) is determined here using an SEM measurement method in the form of gray values. The grey values in the respective measurements are representing the different materials as higher density materials have higher backscattering values which appear brighter. A Carl Zeiss FIB/SEM Auriga 40 equipped with a field emission gun, was used for this study. The primary beam energy value was set at 5000 eV. Backscattered electron (BSE) images were recorded with the Energy selective Backscattered (EsB) electron detector in 8-bit for contrast quantification purposes.

Fig. 7 shows that the refractive index n(λ) in the layer structure changes between the values nLI(λ) and nHI(λ).

The materials with different refractive indices can be easily separated by the grey values and their interfaces analyzed based on the transition from one grey value to another one. The BSE signal values displayed in Fig. 9 as grey values were quantified using the image analysis software Fiji (Image J).

The transition areas of the interfaces from nLI-to-nHI and nHI-to-nLI in Fig. 9 are point- or axis symmetrical with respect to each other and have a thickness in both directions of ~4um in total. The nearly linear part in the center of the transition zones is around 2µm thick. This is sufficiently thicker than the requirement of a 1µm transition zone thickness as described above to yield the desired result of reduced reflectivity on the one hand. On the other hand, it is small enough to leave most of the layer stack untouched.

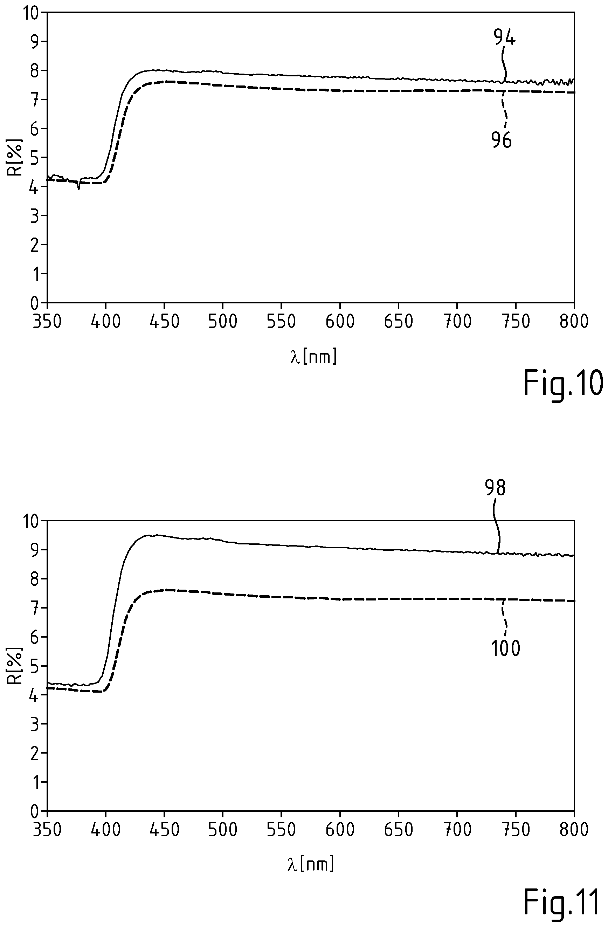

Fig. 10 shows a graph with a measurement curve 94 for the spectral reflectivity R for different wavelengths λ of a spectacle lens manufactured in an additive process with a multilayer stack design, which has volume layers created in an atmosphere with 5000ppm O2, and a measurement curve 96 for the reflectivity of a reference lens, recorded using a Perkin Elmer 950 spectrophotometer equipped with a 150 mm integrating sphere accessory.

In the lens 80 produced in an additive process, there is a transition zone TZi,i+1, i = 1, 2, 3 between each of two volume layers VLi, VLi+1, i = 1, 2, 3 with a different refractive index, which is produced in a process specified above.

The total reflectance was measured by positioning the sample at the exit port of the integrating sphere (8° angle of incidence), collecting from 350 to 800 nm using unpolarized light.

Less than 8% of total reflectance in the visible that is slightly affected by absorption, i.e. λ > 600nm, is measured for the ophthalmic lens with transition zones. The transition zones lead to small material gradients that attenuate the refractive index jump at the interfaces, reducing the difference of total reflectance between sample and reference to less than 0.5%. The remaining reflectance gap with respect to the reference can be explained by the fact that the ophthalmic lenses are not directly comparable in terms of material absorption. The reference ophthalmic lens has more absorption in the visible range due to higher UV cut-off wavelength and the subsequently necessary bluing agents. The difference in total reflectance below 380 nm is explained by the slightly higher refractive index of the printed ophthalmic lens material compared to the material polymerized allyl diglycol carbonate (ADC).

With the method explained in detail here, a spectacle lens made of layers separated by transition zones at the RI jumps, can be made, which has no additional reflection in comparison to a homogeneous sample.

Fig. 11 shows a graph with a measurement curve 98 for the reflectivity of the ophthalmic lens 80 produced in an additive process with a multilayer stack design, in which the refractive index does not change continuously between two volume layers but is discontinuous. In contrast, the measurement curve 100 refers to the reflectivity of a spectacle lens with a multilayer stack design, in which surface layers and transition zones are formed between the volume layers with a constant refractive index, in which the refractive index changes continuously.

The ophthalmic reference lens has a refractive index of 1.50 and is based on polymerized allyl diglycol carbonate (ADC) with a UV cut-off of λ ≈ 400nm. It has a reflectance R ≈ 7.5% which is the expected value for double sided reflectance. The total reflectance in the visible range that is not affected by absorption (λ> 600 nm) was measured as approximately 9%. The increased reflectivity R is explained by the lack of interface optimization. Sharp interfaces lead to an increase of reflectance, given the absence of a buffer that attenuates the refractive index jump at the interfaces, causing the close to 2% difference with respect to the reference sample. It must be noted that the reference sample has only 2 polymer-air interfaces and complies with the spectacle lens industry specifications. The largest contribution to reflectance remains the polymer-air-interface, therefore it was assured that low index layers are at the outer surfaces.

Fig. 11 show that a spectacle lens 80 with a multilayer stack design that provides a transition layer between two volume layers with different refractive indices, in which the refractive index n changes continuously, has a spectral reflectivity R that is around 10% lower than a spectacle lens in which there is no continuous change in the refractive index between two volume layers with a different refractive index.

The reflectivity can be reduced based on the variation of additive manufacturing process parameters to modify the surfaces of those layers that are deposited at the interfaces with a reflection index jump. A multilayer lens within the invention is built layer by layer after fully curing the layer that is printed on top of a layer of the same material, before the deposition of the next layer.

The curing includes a photopolymerization process, which is initiated by exposure to UV-LED or other actinic radiation sources. Each layer consists of UV-curable monomers and oligomers as the backbone chemistry of our UV inkjet inks.

Among the diverse options currently to attain a photopolymer, free radical photopolymerization (FRP) is the utmost common path attributable to the considerable availability of commercial monomers. In FRP under normal laboratory conditions, molecular oxygen inhibits the polymerization reaction by means of the creation of peroxyl radicals, leading to an Oxygen inhibition layer (OIL). The latter demands strategies to ensure a homogeneous level of cure along the sample depth. These strategies could include a longer UV curing time, curing with different wavelength LEDs, use of a broad-spectrum lamp, modifying the photoinitiator and/or UV absorber content or type, increasing the number of curing iterations, among others.

In addition to the oxygen inhibition effect, which leads to a lack of homogeneity in the conversion as a function of depth, the curing process is also affected from the exponential reduction of radiation intensity depending on sample thickness, known as the Lambert-Beer law. Accordingly, levels of cure at the bottom and at the top of thick samples can be different hence negatively affecting the mechanical properties. The surface layer had to be modified to a certain extent, without creating large curing gradients that would affect the optical properties, given that different levels of cure lead to different refractive indices of the material. Furthermore, excessive material mixing at the interfaces could lead to a large diffusion zone and undesired optical artifacts.

The ophthalmic lenses evaluated here are based on the setup shown in Fig. 1. It consists of printed solid layers, for which it is necessary to finally have a high degree of photopolymerization (conversion of the C=C bonds) and that the conversion is homogeneous in XYZ direction. Each layer was pinned (partial LED curing) followed by curing under full N2 atmosphere in order to remove the OIL. To modify the layer surfaces with RI jump, the new printing strategy would include pinning under atmosphere with 5000 PPM of O2, without layer curing at full N2 atmosphere. This ensures that the OIL remains uncured. The subsequent layer is printed on a wet surface which is enabling diffusion and paving the way to the creation of the transition zone, thus leading to a reduction of interface sharpness, consequently reducing the reflectance.

To yield a good anti-reflective performance of the interfaces while retaining contour, the material gradient between the differing materials has to be adjusted on values larger than 1µm. The minimum thickness of the transient zone is defined by the wavelengths of interest between 400 and 800nm to be somewhat twice as thick.

In summary, the following preferred features of the invention should be noted in particular:

The invention relates to a method for producing a spectacle lens 80, in which a plurality of stacked volume layers VLi, i = 1, 2, 3, ... are produced, each of which is produced from a specific volume layer starting material Mi, i = 1, 2, 3, ... which contains at least one reactive component. According to the invention, the volumetric layer starting material Mi of each volumetric layer VLi, i = 1, 2, 3, ... is subjected to a free radical treatment by means of UV radiation prior to application of the volumetric layer VLi+1, i = 1, 2, 3, ... by means of UV radiation for radical polymerization of the at least one reactive component in the presence of an inhibitor present on a surface of the volume layer starting material Mi in such a way that a volume layer VSi and a surface layer OFSi complementary to the volume layer VSi are formed in the volume layer VLi with the volume layer starting material Mi. In the volume layer VSi, i = 1, 2, 3, ... the cure level of the at least one reactive component assumes at least the value PVSi, i = 1, 2, 3, .... The following applies to the cure level POFSi, i = 1, 2, 3, ... in the surface layer OFSi: POFSi < PVSi.

By applying a volume layer VLi+1, i = 1, 2, 3, ... on the volume layer VLi, i = 1, 2, 3, ... after treating the volume layer starting material Mi therein, the volume layer starting material Mi+1 of the volume layer VLi+1, i = 1, 2, 3, ... is at least partially mixed with the volume layer starting material Mi of the volume layer VLi, i = 1, 2, 3, ... in the surface layer OFSi, i = 1, 2, 3, ....

In a transition zone TZi,i+1, i = 1, 2, 3, ... extending from the surface layer OFSi, i = 1, 2, 3, ... of the volume layer VLi, i = 1, 2, 3, ... into the volume layer VLi+1, the volume layer starting material Mi+1 of the volume layer VLi+1 is at least partially mixed with the volume layer starting material Mi of the volume layer VLi in the surface layer OFSi.

The mixing is done in such a way that starting from the volume layer VSi the concentration CMi of the volume layer starting material Mi decreases continuously through the surface layer OFSi, i = 1, 2, 3, ... up into the transition zone TZi,i+1 down to a minimum and starting from the volume layer VSi+1 the concentration CMi+1 of the volume layer starting material Mi+1 decreases continuously through the transition zone TZi,i+1, i = 1, 2, 3, ... up into the surface layer OFSi, i = 1, 2, 3, ... down to a minimum.

### List of reference symbols:

- 10: Apparatus for the manufacture of an optical element
- 11: Chamber of Labor
- 12: Print head
- 13: Lighting unit
- 14: xy displacement unit
- 16: Table
- 18: Substrate
- 20: Level
- 22: Storage container
- 23: Printing ink droplets
- 24: Spectacle lens
- 26: Print head nozzle arrangement
- 27: Device for providing UV radiation
- 30.n.m: Print head nozzle
- 30.n: row
- 32: Computer unit
- 36: Triangle
- 37: Printhead controller
- 38: Model
- 39: Straight
- 40.n: Layer
- 41: Grid

- 42.n.m with n,m = 1, 2, 3: Surface element
- 42.1.0, 42.2.0, 42.3.0, ...: Line
- 42.0.1, 42.0.2, 42.0.3, ...: Column

- 43: Area
- 44: Grayscale image
- 80: Ophthalmic lens
- 82: Graph
- 84: Concentration curve
- 86: Intensity curve
- 88: Hardness curve
- 90: Section
- 92: Refractive index measurement curve
- 93, 97: graph
- 94, 96, 98, 100: Measurement curve

- VLi, i = 1, 2, 3, ...: Volume layer
- VSi, i = 1, 2, 3, ...: Volume layer formed in the treated volume layer VLi
- OFSi, i = 1, 2, 3, ...: Surface layer formed in the treated volume layer VLi
- TZi, i+1, i = 1, 2, ...: Transition zone
- Bi, i+1: range
- n(λ): refractive index
- nVLi(λ): refractive index of material in volume layer VLinLi(λ),
- nHi(λ): refractive index values
- KO2: relative Oxygen concentration
- CL: relative degree of hardness

- d: Thickness volume layer VLi
- do: Thickness surface layer OFSi
- dt: Thickness transition zone TZi, i+1
- m: average printing ink drop volume
- p: Assumed change in layer thickness
- v: assumed printing ink drop volume
- λ: optical wavelength

## Claims

1. A method of manufacturing a spectacle lens (80) comprising the steps of:
Generating a plurality of stacked volume layers VLi, i = 1, 2, 3, ... which are each produced from a layer-specific volume layer starting material Mi, i = 1, 2, 3, ... which contains at least one reactive component,
**characterized by**
treating the volume layer starting material Mi of each volume layer VLi, i = 1, 2, 3, ... prior to the application of the volume layer VLi+1, i = 1, 2, 3, ... above it by means of UV radiation for free-radical polymerization of the at least one reactive component in the presence of an inhibitor present on a surface of the volume layer starting material Mi in such a way that a volume layer VSi and a surface layer OFSi complementary to the volume layer VSi are formed in the volume layer VLi with the volume layer starting material Mi,
wherein in the volume layer VSi, i = 1, 2, 3, ... the cure level of the at least one reactive component assumes at least the value PVSi, i = 1, 2, 3, ... and wherein the following applies to the cure level POFSi, i = 1, 2, 3, ... in the surface layer OFSi: POFSi < PVSi,
wherein by applying a volume layer VLi+1, i = 1, 2, 3 ... on the volume layer VLi, i = 1, 2, 3, ... after treating the volume layer starting material Mi therein, the volume layer starting material Mi+1 of the volume layer VLi+1, i = 1, 2, 3, ... is at least partially mixed with the volume layer starting material Mi of the volume layer VLi, i = 1, 2, 3, ... in the surface layer OFSi, i = 1, 2, 3, ..., and in a transition zone TZi,i+1, i = 1, 2, 3, ... extending from the surface layer OFSi, i = 1, 2, 3, ... of the volume layer VLi, i = 1, 2, 3, ... into the volume layer VLi+1, the volume layer starting material Mi+1 of the volume layer VLi+1 is at least partially mixed with the volume layer starting material Mi of the volume layer VLi in the surface layer OFSi in such a way that
both starting from the volume layer VSi the concentration CMi of the volume layer starting material Mi decreases continuously through the surface layer OFSi, i = 1, 2, 3, ... up into the transition zone TZi,i+1 down to a minimum and
starting from the volume layer VSi+1 the concentration CMi+1 of the volume layer starting material Mi+1 decreases continuously through the transition zone TZi,i+1, i = 1, 2, 3, ... up into the surface layer OFSi, i = 1, 2, 3, ... down to a minimum and
wherein for the refractive index nVLi(λ) of a material of the ophthalmic lens (80) in a volume layer VLi(λ) and for the refractive index nVLi+1(λ) of a material of the ophthalmic lens (80) in a volume layer VLi+1 adjacent thereto, in each case outside a surface layer OFSi, i = 1, 2, 3, ... and outside a transition zone TZi,i+1, i = 1, 2, 3, ... after treatment with UV radiation holds: nVLi(λ) > nVLi+1(λ) or nVLi(λ) < nVLi+1(λ), where λ is the optical wavelength in a wavelength interval λ1 ≤ λ ≤ λ2 and λ1 ≠ λ2.

2. Method according to claim 1, **characterized in that** the minimum concentration CMi of the bulk layer starting material Mi in the transition zone TZi,i+1 and the minimum concentration CMi+1 of the bulk layer starting material Mi+1 in the surface layer OFSi each have the value zero.

3. Method according to claim 1 or claim 2, **characterized in that** the layer volume starting material Mi of the volume layer VLi and the layer volume starting material Mi+2 of the volume layer VLi+2 are identical.

4. Method according to one of the claims 1 to 3, **characterized in that** a refractive index of a material of the ophthalmic lens (80), starting from the volume layer VSi and passing through a surface layer OFSi and a transition zone TZi,i+1 adjacent thereto, continuously changes from the refractive index nVLi(λ) of the volume layer VSi outside the surface layer OFSi and outside a transition zone TZi-1,i, i = 2, 3, ... to the refractive index nVLi+1(λ) of the volume layer VSi+1 of the volume layer VLi+1 outside the transition zone TZi,i+1, i = 1, 2, 3, ... and outside a surface layer OFSi, i = 1, 2, 3, ... connected to the volume layer VSi+1.

5. Method according to claim 4, **characterized in that** for the absolute value of the difference D of the refractive index nVLi(λ) of a material of the ophthalmic lens (80) in the volume layer VSi(λ) of the volume layer VLi and of the refractive index nVLi+1(λ) of a material of the ophthalmic lens (80) in the volume layer VSi+1 of the volume layer VLi+1 outside a surface layer OFSi, i = 1, 2, 3, ... and a transition zone TZi,i+1, i = 1, 2, 3, ... after treatment with UV radiation holds: | D | ≠ 0, preferably | D | ≥ 0.05, particularly favored | D | ≥ 0.1.

6. Process according to any one of claims 1 to 5, **characterized in that** the inhibitor is oxygen.

7. Method according to one of claims 1 to 6, **characterized in that** the layer volume starting material Mi of each volume layer VLi is in each case a material having one or more functional groups, in particular an acrylate group and/or an epoxide group and/or a vinyl group.

8. Method according to one of claims 1 to 7, **characterized in that** each volume layer VLi, i = 1, 2, 3, ... is applied in an additive manufacturing process.

9. Method according to claim 8, **characterized in that** the additive manufacturing process is a printing method in which a volume layer VLi, i = 1, 2, 3, ... is produced from a layer volume starting material Mi by applying individual body material droplets.

10. Method according to one of claims 1 to 9, **characterized in that** the following applies to the thickness do of the surface layer OFSi in a treated volume layer VLi: 600nm ≤ do ≤ 2000nm and/or **in that** the following applies to the thickness dt of the transition zone TZi,i+1 in a treated volume layer VLi+1: 600nm ≤ dt ≤ 2000nm.

11. The method according to one of the claims 1 to 10, **characterized in that** λ is the optical wavelength in a wavelength interval 300nm ≤ λ ≤ 2000nm, preferably 350nm ≤ λ ≤ 1500nm, particularly favorable 400nm ≤ λ ≤ 800nm.

12. Method according to any one of claims 1 to 11, **characterized by** the following steps:
a. Providing a substrate (18),
b. Provision of a three-dimensional model (38) of the ophthalmic lens, the three-dimensional model having a plurality of layered volumes (i, i+1) of a body material with a first refractive index ni(λ) and with a further refractive index ni+1(λ) different from the first refractive index ni(λ), which layered volumes (i, i+1) are successively interspersed with one another from a body axis A,
c. Digital slicing of the three-dimensional model (38) from step b. into the individual layers (40.1, 40.2, 40.3, ...), the individual layers each being divided into a grid (41) with surface elements (42.n.m, n = 1, 2, 3, ...; m = 1, 2, 3, ...),
d. Providing a first printing ink, preferably 3D printing ink, in the form of the body material with the first refractive index ni(λ) and a further printing ink, preferably 3D printing ink, in the form of the body material with the further refractive index ni+1(λ),
e. Construction of the ophthalmic lens (80) from the sum of the individual layers (40.1, 40.2, 40.3, ...) from step c. by means of a printing process on the substrate (18), in which the first printing ink and the further printing ink are each applied in the form of drops (23) to defined surface elements (42.n.m, n = 1, 2, 3, ...; m = 1, 2, 3, ...) of the screen (41) of a single layer, which has a print head nozzle arrangement (26) with a plurality of print head nozzles (30.n.m, n = 1, 2, 3, ...; m = 1, 2, 3, ...) in order to produce in this way the plurality of stacked volume layers VLi, i = 1, 2, 3, ... from a volume layer starting material Mi which contains at least one reactive component.

13. Process according to one of claims 1 to 12, **characterized in that** the reactive component is a monomer from the group comprising a (meth)acrylate group and/or an epoxy group and/or a vinyl group.

14. Process according to one of claims 1 to 13, **characterized in that** at least ten stacked volume layers VLi, i = 1, 2, 3, ... are produced, which are produced alternately from first and a specific volume layer starting material Mi, i = 1, 2, 3, ..., which contains at least one reactive component.

15. A spectacle lens produced by a method according to any one of claims 1 to 14.
